# EUROPEAN PATENT SPECIFICATION

(11) **EP 1 106 017 B1**
(45) Date of publication and mention of the grant of the patent: **06.12.2006**
(21) Application number: 00940505.1
(22) Date of filing: 08.06.2000
(51) Int. Cl.: H04Q 3/00, H04L 12/56, H04Q 3/68, H04L 12/437

(54) **MESH NETWORKS**
VERMASCHTES NETZWERK
RESEAUX MAILLES

(30) Priority: 17.06.1999 GB 9913990; 02.06.2000 GB 0013323
(43) Date of publication of application: 13.06.2001
(73) Proprietor: Ericsson AB, 164 83 Stockholm (SE)
(72) Inventor: CHOPPING, Geoffrey, Wimborne, Dorset BH21 4HD (GB); MADDERN, Thomas Slade, Wimborne, Dorset BH21 2HU (GB)
(74) Representative: Stasiewski, Piotr Grzegorz
(86) International application number: PCT/GB2000/002237
(87) International publication number: WO 2000/079806

(56) References cited:
- EP-A- 0 851 693
- WO-A-98/31159
- US-A- 4 853 927
- US-A- 5 535 195
- ANDREAS PROBST, RAINER STADEMANN: "DEVELOPING DYNAMIC ROUTING IN HETEROGENOUS NETWORKS" SIEMENS AG, GERMANY, pages 125-132, XVI WORLD TELECOM CONGRESS PROCEEDINGS

## Description

In networks, such as telecommunication networks, fully meshed networks are often used to interconnect the nodes together and in particular to interconnect trunk exchanges. Although fully meshed networks can be of considerable use, they do have the characteristic that the more nodes there are in a fully meshed network, then the narrower the routes between nodes have to be once the switches are port limited. Doubling the nodes in a fully meshed network can halve the size of each route across the mesh. However, reducing the route size can increase the chance of blocking as well as reducing the Erlang efficiency.

In some telecommunication networks each fully meshed trunk exchange is also connected to several local exchanges, so that the longer distance trunk calls tend to traverse four exchanges namely a local, a trunk, a second trunk and a final local.

In such a network the local exchanges only need to know if a call originating on its own exchange cannot be terminated on its own exchange, in which case the call is forwarded to a trunk exchange.

For reasons of redundancy a local exchange is normally connected to more than one trunk exchange, in which case a call which cannot be terminated on its own exchange can probably be forwarded to any of the connected trunk exchanges.

However if the local exchanges are connected to more trunk exchanges than are needed for redundancy reasons, then the local exchange could be asked to perform part of the overall trunk routing algorithm. Consequently the intended final destination of the call can be used to decide to which trunk exchange the call should be sent to by the local exchange.

Provided the local exchange is able to route to more than one trunk exchange depending on the destination of the call, then it is possible to use a pair of trunk exchanges to perform the function of one existing trunk exchange, with approximately twice the capacity and throughput. This is assuming that the two exchanges each have the same or similar capacity to the existing trunk exchange. The existing trunk exchange can be one of the pair of trunk exchanges. The pair of trunk exchanges can be known as Siamese trunk exchanges.

European patent application EP0851693 discloses a telecommunications network, comprising a plurality of mesh nodes each including a switch and a plurality of local nodes, each mesh node of the network having a connection to another mesh node by means of a connection between the switch at one mesh node and the switch at the other mesh node, each of the local nodes being connected to the switch of one of the mesh nodes and a network routing algorithm to control the routing in the network.

According to the present invention there is provided a network comprising at least one mesh node including more than one switch, wherein the connections for a mesh node having a plurality of switches are configured such that a connection from another mesh node is only connected to one of the switches associated with the mesh node having a plurality of switches, and each mesh node having associated therewith a respective plurality of local nodes, each switch of each mesh node being connected to all of the respective associated plurality of local nodes.

There is further provided a method of upgrading a telecommunications network, the telecommunications network comprising a plurality of mesh nodes, wherein each mesh node includes a switch, each mesh node having a connection to another mesh node by means of a connection between the switch at one mesh node and the switch at the other mesh node, the switch of each mesh node being connected to all of a respective associated plurality of local nodes and a network routing algorithm to control the routing in the network, the method comprising the steps of:
(a) adding one or more further switches to at least one of the mesh nodes;
(b) connecting all of the respective associated plurality of local nodes to each further switch;
(c) configuring the connections for a mesh node having a plurality of switches such that a connection from another mesh node is only connected to one of the switches associated with the mesh node having a plurality of switches; and
(d) altering the network routing algorithm to include routing for each further switch added to one of the mesh nodes.

The present invention will now be described by way of example, with reference to the accompanying drawings in which:
Figure 1 shows an example of a network having a number of fully meshed mesh nodes;
Figure 2 shows an example of a fully meshed mesh node of the network shown in Figure 1 connected to multiple local nodes;
Figure 3 shows an example of a fully meshed mesh node of the network shown in Figure 1 with a single switch;
Figure 4 shows an example of a fully meshed mesh node of the network shown in Figure 1 with two unconnected switches;
Figure 5 shows an example of a fully meshed mesh node of the network shown in Figure 1 with two connected (Siamese) switches; and
Figure 6 shows an example of a network as shown in Figure 1 including a number of fully meshed mesh nodes where each node has two switches.

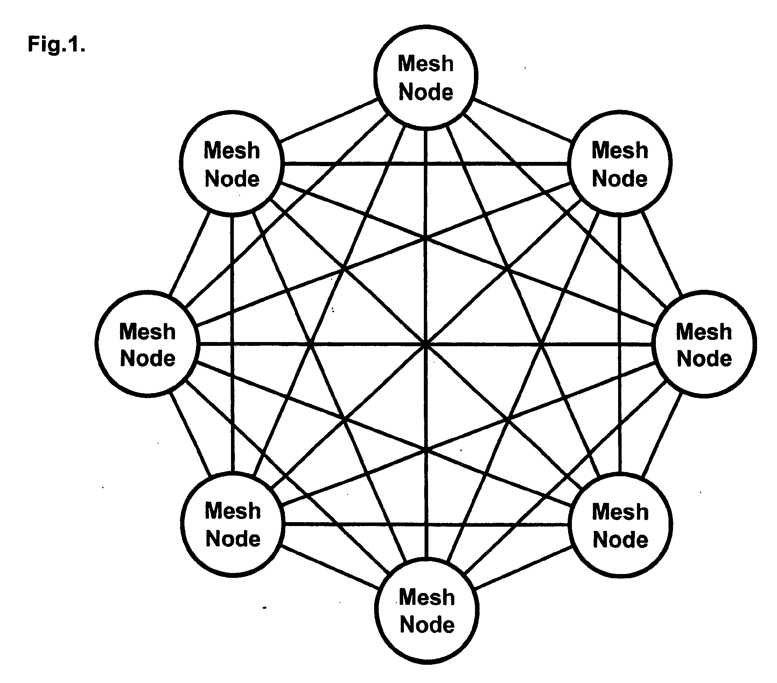

Figure 1 shows an example of a network having fully meshed mesh nodes, such as trunk exchanges, where each mesh node is directly connected to every other mesh node. In practice these links are often carried by transmission systems.

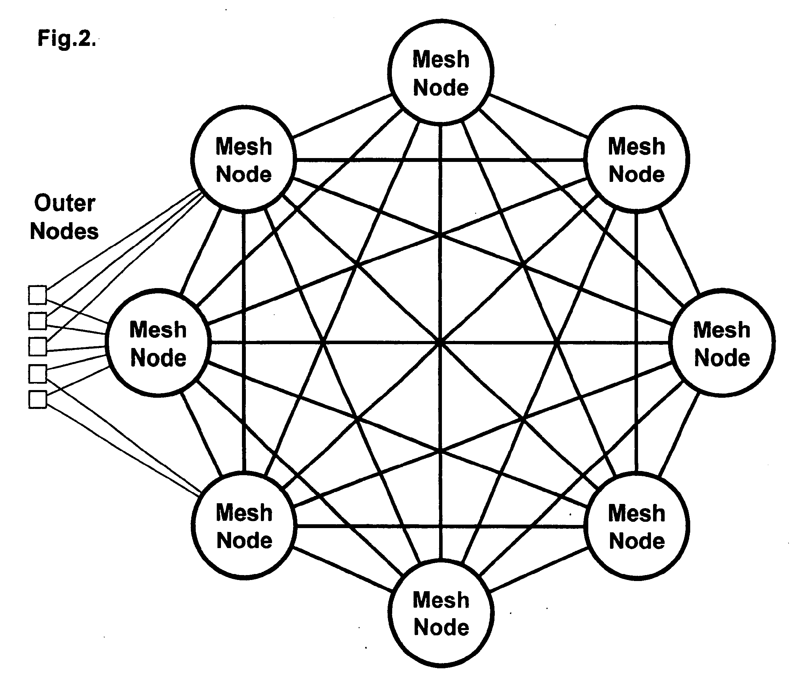

In Figure 2 some of the mesh nodes (trunk exchanges) of Figure 1 are shown connected to multiple local nodes, such as local exchanges. In practice these connections are often carried by transmission systems. The connection of multiple local exchanges to trunk exchanges is a recognised telecommunication network configuration.

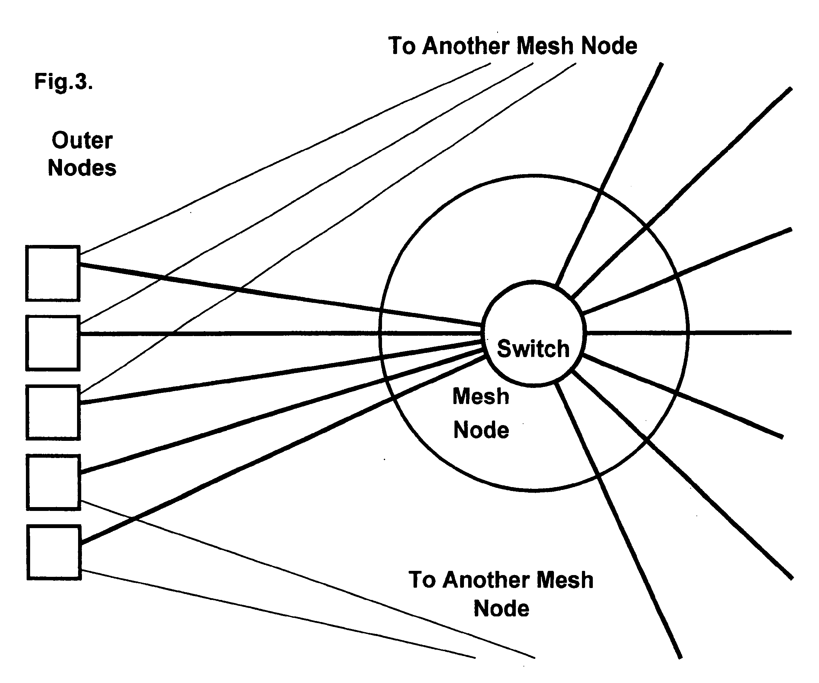

Figure 3 shows a mesh node of Figure 2 containing a single switch. Such a switch could be a trunk exchange equipment. This switch is connected to all the other mesh Nodes as well as all the illustrated multiple Local Nodes. The illustrated Local Nodes may also be connected to switches at other mesh nodes.

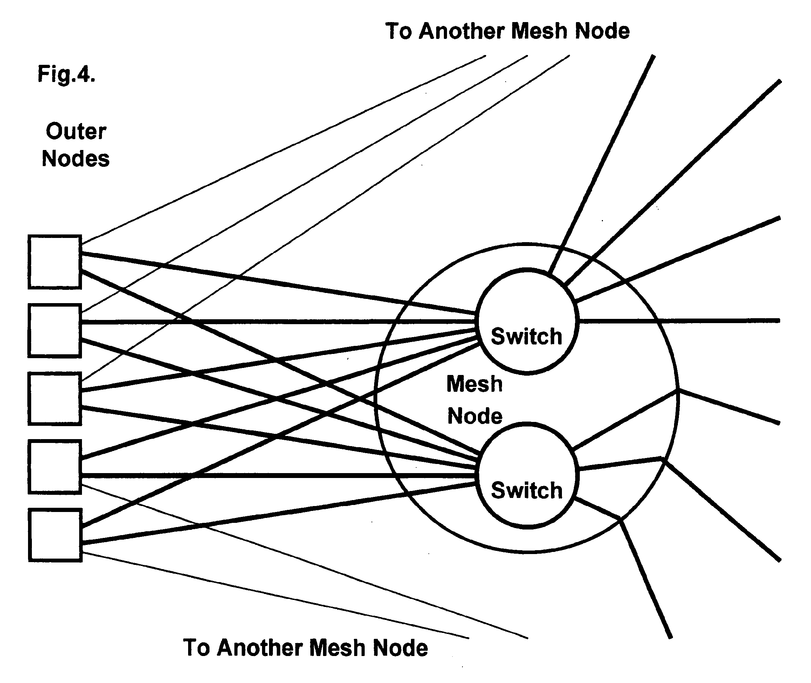

Figure 4 shows the mesh node of Figure 3, to which has been added a further switch. Any added switches could be trunk exchanges. The direct links from the other mesh nodes are taken to one or the other, but not both, of the switches. The pair of switches are both connected to all the multiple local nodes associated with that mesh node. The local nodes have to be able to route calls or messages to the appropriate one of the pair of switches.

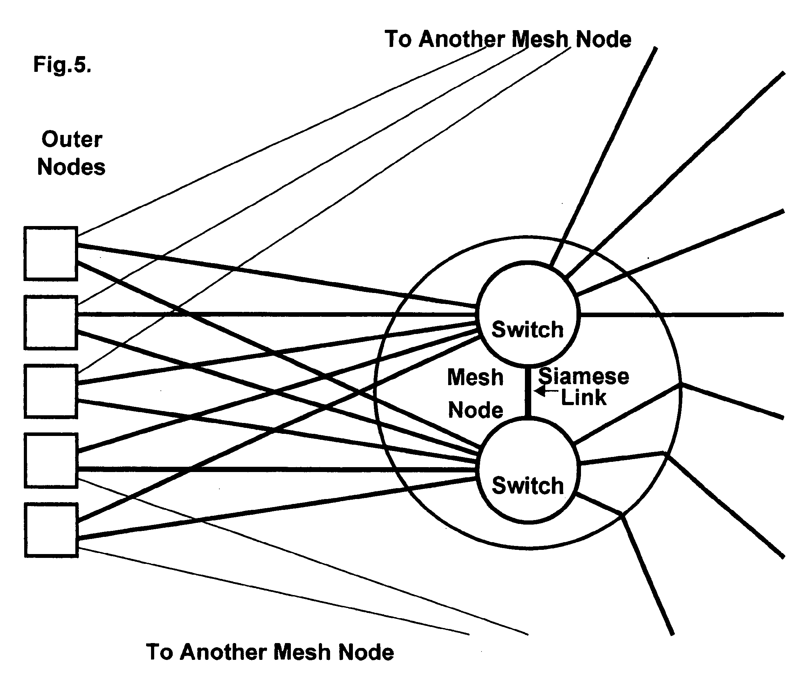

Figure 5 shows the mesh node containing two switches as in Figure 4, but with a connection (Siamese link) between them. If the connection between an local node and the switch that is normally used to route a call or message is congested, then if the connection to the other one of the pair of switches is not congested then this connection and the Siamese link can be used in series, to avoid the congestion. The Siamese link is not essential, but can be a useful feature for practical networks.

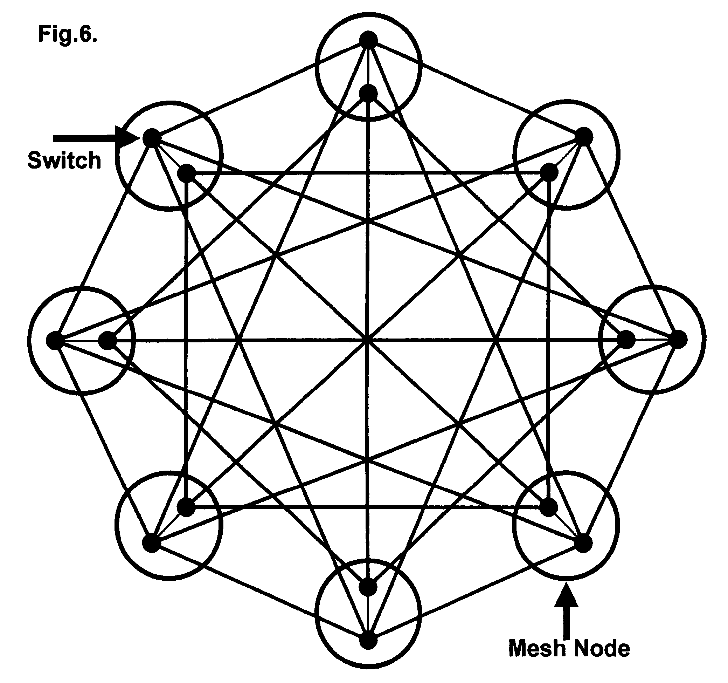

Figure 6 shows an example of a network where all the Mesh Nodes each have two switches, each pair of switches within a mesh node being joined by a Siamese link. The overall result is that each switch is connected to approximately one half of the other mesh nodes and approximately one quarter of the other switches. For larger examples the approximations can be more precise, but there is no basic need to equally divide the routes between the mesh nodes and the switches. Some routes may naturally carry more traffic and some pairs of switches may not have identical characteristics to each other.

The network will require a network routing algorithm to control the routing of messages, of whatever form through the network.

## Claims

1. A telecommunications network, comprising a plurality of mesh nodes each including a switch and a plurality of local nodes, each mesh node of the network having a connection to another mesh node by means of a connection between the switch at one mesh node and the switch at the other mesh node, each of the local nodes being connected to the switch of one of the mesh nodes and a network routing algorithm to control the routing in the network, **characterised in that** the network comprises at least one mesh node including more than one switch, wherein the connections for a mesh node having a plurality of switches are configured such that a connection from another mesh node is only connected to one of the switches included in the mesh node having a plurality of switches, and each switch of each mesh node being connected to all the respective associated plurality of local nodes.

2. A telecommunications network as claimed in Claim 1, wherein one or more local nodes are connected to more than one mesh node.

3. A telecommunications network as claimed in Claim 1 or 2, wherein the plurality of switches of a mesh node are interconnected.

4. A method of upgrading a telecommunications network, the telecommunications network comprising a plurality of mesh nodes, wherein each mesh node includes a switch, each mesh node having a connection to another mesh node by means of a connection between the switch at one mesh node and the switch at the other mesh node, the switch of each mesh node being connected to all of a respective associated plurality of local nodes and a network routing algorithm to control the routing in the network, the method **characterised by**:
(a) adding one or more further switches to at least one of the mesh nodes;
(b) connecting all of the respective associated plurality of local nodes to each further switch;
(c) configuring the connections for a mesh node having a plurality of switches such that a connection from another mesh node is only connected to one of the switches included in the mesh node having a plurality of switches; and
(d) altering e network routing algorithm to include routing for each further switch added to one of the mesh nodes.

5. A method of upgrading a telecommunications network as claimed in Claim 4, further including the step of making an interconnection between the switches of a mesh node having a plurality of switches.

## Patentansprüche

1. Telekommunikationsnetz, das umfasst: mehrere Maschen-Knoten, die jeweils einen Switch und mehrere lokale Knoten aufweisen, wobei jeder Maschen-Knoten des Netzes eine Verbindung zu einem anderen Maschen-Knoten mittels einer Verbindung zwischen dem Switch an einem Maschen-Knoten und dem Switch an dem anderen Maschen-Knoten aufweist, wobei jeder der lokalen Knoten mit dem Switch eines der Maschen-Knoten verbunden ist, und einen Netz-Routing-Algorithmus, um das Routing im Netz zu steuern, **dadurch gekennzeichnet, dass** das Netz wenigstens einen Maschen-Knoten umfasst, der mehr als einen Switch enthält, wobei die Verbindungen für einen Maschen-Knoten, der mehrere Switches aufweist, derart konfiguriert sind, dass eine Verbindung von einem anderen Maschen-Knoten nur an einen der Switches angeschlossen ist, die in dem Maschen-Knoten enthalten sind, der mehrere Switches aufweist, und wobei jeder Switch jedes Maschen-Knotens mit allen jeweiligen zugehörigen mehreren lokalen Knoten verbunden ist.

2. Telekommunikationsnetz nach Anspruch 1, wobei ein oder mehrere lokale Knoten mit mehr als einem Maschen-Knoten verbunden sind.

3. Telekommunikationsnetz nach Anspruch 1 oder 2, wobei die mehreren Switches eines Maschen-Knotens untereinander verbunden sind.

4. Verfahren zum Nachrüsten eines Telekommunikationsnetzes, wobei das Telekommunikationsnetz umfasst: mehrere Maschen-Knoten, wobei jeder Maschen-Knoten einen Switch enthält, wobei jeder Maschen-Knoten eine Verbindung zu einem anderen Maschen-Knoten mittels einer Verbindung zwischen dem Switch an einem Maschen-Knoten und dem Switch an dem anderen Maschen-Knoten aufweist, wobei der Switch jedes Maschen-Knotens mit allen jeweiligen zugehörigen mehreren lokalen Knoten verbunden ist, und einen Netz-Routing-Algorithmus, um das Routing im Netz zu steuern, wobei das Verfahren **gekennzeichnet ist durch**:
(a) Hinzufügen eines oder mehrerer weiterer Switches zu wenigstens einem der Maschen-Knoten;
(b) Verbinden aller jeweiligen zugehörigen mehreren lokalen Knoten mit jedem weiteren Switch;
(c) Konfigurieren der Verbindungen für einen Maschen-Knoten, der mehrere Switches aufweist, derart, dass eine Verbindung von einem anderen Maschen-Knoten nur an einen der Switches angeschlossen ist, die in dem Maschen-Knoten enthalten sind, der mehrere Switches aufweist; und
(d) Ändern des Netz-Routing-Algorithmus, so dass er das Routing für jeden weiteren Switch enthält, der zu einem der Maschen-Knoten hinzugefügt wurde.

5. Verfahren zum Nachrüsten eines Telekommunikationsnetzes nach Anspruch 4, welches ferner den Schritt des Herstellens einer Verbindung zwischen den Switches eines Maschen-Knotens, der mehrere Switches aufweist, umfasst.

## Revendications

1. Réseau de télécommunication, comprenant une pluralité de noeuds maillés incluant chacun un commutateur et une pluralité de noeuds locaux, chaque noeud maillé du réseau ayant une connexion vers un autre noeud maillé au moyen d'une connexion entre le commutateur au niveau d'un noeud maillé et le commutateur au niveau de l'autre noeud maillé, chacun des noeuds locaux étant connecté au commutateur d'un des noeuds maillés et un algorithme de routage de réseau afin de commander le routage dans le réseau, **caractérisé en ce que** le réseau comprend au moins un noeud maillé incluant plus d'un commutateur, moyennant quoi les connexions pour un noeud maillé ayant une pluralité de commutateurs sont configurées de telle sorte qu'une connexion à partir d'un autre noeud maillé soit seulement connectée à un des commutateurs inclus dans le noeud maillé ayant une pluralité de commutateurs, et chaque commutateur de chaque noeud maillé étant connecté à toute la pluralité respective associée de noeuds locaux.

2. Réseau de télécommunication selon la revendication 1, dans lequel un ou plusieurs noeuds locaux sont connectés à plus d'un noeud maillé.

3. Réseau de télécommunication selon la revendication 1 ou 2, dans lequel la pluralité de commutateurs d'un noeud maillé sont interconnectés.

4. Procédé de mise à niveau d'un réseau de télécommunication, le réseau de télécommunication comprenant une pluralité de noeuds maillés, moyennant quoi chaque noeud maillé inclut un commutateur, chaque noeud maillé ayant une connexion à un autre noeud maillé au moyen d'une connexion entre le commutateur au niveau d'un noeud maillé et le commutateur au niveau de l'autre noeud maillé, le commutateur de chaque noeud maillé étant connecté à toute une pluralité respective associée de noeuds locaux et un algorithme de routage de réseau pour commander le routage dans le réseau, le procédé étant **caractérisé par** :
(a) l'ajout d'un ou plusieurs commutateurs supplémentaires à au moins un des noeuds maillés ;
(b) la connexion de toute la pluralité respective associée de noeuds locaux à chaque commutateur supplémentaire ;
(c) la configuration des connexions pour un noeud maillé ayant une pluralité de commutateurs, de telle sorte qu'une connexion à partir d'un autre noeud maillé soit seulement connectée à un des commutateurs inclus dans le noeud maillé ayant une pluralité de commutateurs ; et
(d) la modification de l'algorithme de routage de réseau afin d'inclure le routage pour chaque commutateur supplémentaire ajouté à un des noeuds maillés.

5. Procédé de mise à niveau d'un réseau de télécommunication selon la revendication 4, incluant en outre l'étape consistant à effectuer une interconnexion entre les commutateurs d'un noeud maillé ayant une pluralité de commutateurs.
